# EUROPEAN PATENT APPLICATION

(11) **EP 3 673 973 A1**
(43) Date of publication of application: **01.07.2020**
(21) Application number: 19211534.3
(22) Date of filing: 26.11.2019
(51) Int. Cl.: B01D 53/14

(54) **DECARBONIZATION SOLUTION FOR CAPTURING CARBON DIOXIDE IN MIXED GAS AND CAPABLE OF REDUCING IMPACT OF HYGROSCOPICITY**

(30) Priority: 24.12.2018 CN 201811580330
(71) Applicant: Dalian University of Technology, Dalian, Liaoning 116024 (CN); Xinjiang Dunhua Oil Technology Co., Ltd., Karamay City, Xinjiang (CN)
(72) Inventor: ZHANG, Yongchun, DALIAN, Liaoning 116024 (CN); ZHAO, Yiming, DALIAN, Liaoning 116024 (CN); CHEN, Shaoyun, DALIAN, Liaoning 116024 (CN); LI, Qiang, DALIAN, Liaoning 116024 (CN); ZHANG, Hua, DALIAN, Liaoning 116024 (CN); WANG, Junping, DALIAN, Liaoning 116024 (CN); QUE, Meng, DALIAN, Liaoning 116024 (CN)
(74) Representative: EP&C

(57) **Abstract**

The present invention belongs to the technical field of gas separation, and provides a decarbonization solution for capturing carbon dioxide in a mixed gas and capable of reducing an impact of hygroscopicity, which effectively reduces the impact of hygroscopicity of a solvent on the performance of a non-aqueous solution. An activator having a mass percentage of 0.1-20wt% and a concentration of 0.1-2 mol/L is added to an original mixed decarbonization solution. Based on a desorption principle of an ethylethanolamine (EMEA) composite decarbonization solution, a small amount of an aqueous piperazine solution is added to strengthen an absorption capacity of the EMEA solution while ensuring the regeneration efficiency thereof and basically maintaining original energy consumption. By adding the aqueous piperazine solution, the composite decarbonization solution of the present invention reduces the impact of a water content in a flue gas on the performance of the EMEA mixed decarbonization solution, mainly in two aspects, one is that the absorption capacity of the original mixed solution is maintained and increased, and the other is that the regeneration efficiency of the solution is almost not affected.

## Description

### TECHNICAL FIELD

The present invention belongs to the technical field of gas separation, and relates to a study on reducing an impact of a water content in a flue gas on the performance of a solvent during a decarbonization process, and in particular, to an N-ethylethanolamine mixed decarbonization solution and several types of liquid activator aqueous solutions.

### BACKGROUND

Environmental issues are increasingly becoming the focus of attention, and the greenhouse effect has become a global environmental issue. Although CO₂ is the main cause of the greenhouse effect, it can be applied to many fields as a potential carbon resource. Therefore, the capture of CO₂ has become a hot research topic. With the increase of industrialization, annual emissions of CO₂ from fossil fuel combustion in the world can reach 20 billion tons. Flue gas produced by fossil fuel power plants is a concentrated source of CO₂ emissions, with characteristics such as large gas flow and low CO₂ partial pressure, and the process of separating CO₂ included in flue gas is quite different from decarbonization in other industrial processes. Therefore, it is imperative to research and develop a method for capturing and recovering CO₂ from flue gas.

A chemical absorption method has the characteristics of high absorption rate and large absorption capacity, but it has the shortcomings such as high regeneration temperature, large desorption energy consumption and high corrosivity. In order to overcome the shortcoming of high regeneration energy consumption in the chemical absorption method, researchers in various countries are working to improve desorption rate and reduce desorption energy consumption by changing a solution formulation and adding a catalyst, etc.

In 1985, a Chinese patent (CN103855A) disclosed a method for removing carbon dioxide from a gas mixture, where an absorbent comprises 15-30% potassium carbonate, 10-30 g/L diethanolamine, 10-20 g/L glycine, 15-30 g/L boric acid, and 5-10 g/L total vanadium (based on KVO₃), and a solution has a capacity to absorb 21-26 Nm³ CO₂ per m³ solution.

In 1999, a US patent (US09, 329, 259) disclosed a method for absorbing carbon dioxide from a feed gas, where the carbon dioxide in the feed gas is absorbed into a composite solution; a preferred composite solvent includes one or more of fast reaction amines with a smaller concentration (monoethanolamine (MEA) or diethanolamine (DEA) with a mass fraction from 5% to 35%) and one or more of slow reaction amines with a higher concentration (N-methyldiethanolamine (MDEA) with a mass fraction from 5% to 50%).

In 2001, a US patent (US6, 290, 754 B1) disclosed a method for removing carbon dioxide from a mixed gas, where an active component is added to a MDEA solution to form an absorbent, the concentration of MDEA being 1-6 mol/L; the active component is H₂N-CnH₂n-NH-CH₂-CH₂OH (1 ≤ n ≤ 4), having a concentration between 0.01 and 0.5 of a molar concentration of total amines.

In 2002, a Chinese patent (CN1340374A) disclosed a composite decarbonization solution for removing carbon dioxide from a gas, where the weight percentage of an amine is composed of the following materials: A. 30-50% MDEA, B. 0.1-1.5% dimethylethanolamine, C. 0.5-1.5% methylethanolamine, D. 1-2% piperazine, and E. the rest being water; a solution has a capacity to absorb 22-26 Nm³ CO₂ per m³ solution.

In 2007, a Chinese patent (CN101053751A) disclosed a composite decarbonization solution for recovering carbon dioxide from an exhaust gas, where the composite solution includes the following components by mass: 20-60% of composite aqueous ammonia, which includes one or more of fast reaction amines with a lower concentration and one or more of slow reaction amines with a higher concentration; 5-10% of polyalcohol ether; 1-5% of antioxidant; 1-5% of corrosion inhibitor; and the rest being water.

In 2007, a Korean patent (KR10, 2007, 0097560) disclosed a mixed absorbent for separating carbon dioxide, where the absorbent includes 100 weight parts of compound (formula 1), and 1-60 mass parts of heterocyclic compound (formula 2) with at least one amino on a ring; molecularly, the compound (formula 1) includes one hydroxyl and one primary amino; no substituent is adjacent to an α-carbon position of the amino, and an alkyl substituent and an alcoholic hydroxyl substituent are located on a β-carbon.

In 2007, a Chinese patent (CN101091864) disclosed a composite decarbonization solution for recovering carbon dioxide from a gas, composed of a main absorption component, an auxiliary absorption component, an activating component, a corrosion inhibitor, an antioxidant, and water, where the main absorption component is aminoethylethanolamine (AEEA); the auxiliary absorption component is 2-amino-2-methyl-1-propanol (AMP), MDEA and triethanolamine (TEA); the activating component is MEA, DEA and piperazine (PZ); the corrosion inhibitor is sodium vanadate; the antioxidant is sodium sulfite and copper acetate. The decarbonization solution has the advantages of large absorption capacity, high purification degree, large desorption rate, low regeneration energy consumption and the like.

In 2012, a Chinese patent (CN102527192A) disclosed a carbon dioxide absorbent including an ionic liquid, where the absorbent includes 5-50wt% of ionic liquid, 5-50wt% of alcoholamine, and 0-90wt% of water; an anion has an amino acid structure; a cation is an organic amine salt cation or an organic alcohol amine cation; the alcohol amine is monoethanolamine, diethanolamine, triethanolamine, N-methyldiethanolamine, 2-amino-2-methyl-1-propanol; a corrosion inhibitor and an antioxidant can also be added.

In summary, at present, the MEA, the DEA, the AEEA and the like are mainly used as main absorbents, and the MDEA and the like are used as auxiliary absorbents. These absorbents are combined with a variety of active components with strong absorption capacity, as well as preservatives, and corrosion inhibitors, etc. to form decarbonization aqueous solutions. Although the decarbonization aqueous solutions have their own advantages, they have generally low comprehensive decarbonization capacity, high regeneration energy consumption, large solvent circulation amount, and high equipment corrosion. These solvents generally include 30% active components and nearly 70% water. During a regeneration process, the solutions that absorb CO₂ (commonly known as rich solutions) need to be heated to 100-120°C; at this temperature, a large amount of water will evaporate with the decomposition of an absorption intermediate, resulting in excessive regeneration energy consumption; the evaporated water needs to be condensed at the top of a regeneration tower to maintain the balance of water in a system; the amount of condensed water required in the condensation process is large, so that the use cost of decarbonization aqueous solutions has been high, and economic benefits cannot be optimized, so there is still room for improvement.

To this end, efforts are made to the development of non-aqueous solvents. In 2011, a patent on a non-aqueous solvent for capturing carbon dioxide was applied (application number: 2011102305706), where the solvent uses benzyl alcohol, phenylethyl alcohol, N-methylpyrrolidone and a mixture thereof. The solvent has higher absorption and desorption capacities, but this patent does not break a traditional research idea of non-aqueous solvents; instead, it uses the mixture of alcohols and ketones and has not made a breakthrough. The invention of the present patent breaks the traditional research idea to use a new solvent, which acts as a solvent and also participate as a reactant in reaction, increasing absorption capacity, desorption capacity and desorption rate.

In 2014, a patent on a non-aqueous solvent method for capturing CO₂ was applied and granted (patent number: 201410777169.8), where a solute is a secondary amine: N-ethylethanolamine (EMEA), accounting for 20%-80% by mass; a solvent is N,N-diethylethanolamine (DEMEA), accounting for 20%-80% by mass. Although the non-aqueous solution (EMEA + DEMEA) absorbs less than an aqueous solution in a first absorption process, its desorption efficiency, desorption capacity and circulating absorption capacity are significantly higher than those of the aqueous solution, indicating that the non-aqueous solution has good recycling performance and stability. In a practical application, the non-aqueous solution can capture 2%-90% by volume of CO₂ from a mixed gas, with a large absorption of 50 Nm³ CO₂ per m³ solution per hour, a high desorption amount of 49 Nm³ CO₂ per m³ solution, and a desorption rate over 98%, with desorption starting at 70-90°C. The desorption rate of a traditional aqueous solution is between 50% and 70%. The most important feature of the present invention lies in that a tertiary amine, N,N-diethylethanolamine (DEMEA) is used as a solvent, which not only has the advantages of high boiling point, low viscosity, good stability and high solubility, etc., but also can participate in a deprotonation reaction, improving absorption capacity, desorption capacity and desorption rate.

In 2017, a patent on a non-aqueous solvent method for capturing CO₂ was applied (application number: 201710186215.0), where solid porous TiO(OH)₂ is added to a non-aqueous solution EMEA system to form a new two-phase modified non-aqueous solution. The modified non-aqueous solution cannot improve the absorption effect of the non-aqueous solution, but greatly increases the desorption rate thereof, and the desorption rate can reach up to 250 Nm³ CO₂ per m³ solution per hour.

### SUMMARY

An objective of the present invention is to solve a problem that the hygroscopicity of an existing non-aqueous solution has an impact on the performance of the solution, that is, to add an aqueous piperazine solution to increase the absorption capacity of an ethylethanolamine (EMEA) mixed decarbonization solution, and weaken the impact of the presence of water on the desorption performance of the solution.

The technical solution of the present invention is as follows:
A decarbonization solution for capturing carbon dioxide in a mixed gas and capable of reducing an impact of hygroscopicity, where the decarbonization solution includes a solute, a solvent and an activator; the mass percentage of the solute and the solvent is 80.0-99.9wt% of the decarbonization solution, and the activator accounts for the rest mass percentage; the decarbonization solution is capable of being used under the conditions: 0-1.2 MPa of pressure, and 10-140°C of temperature;
the solute is N-ethylethanolamine; the solvent is N,N-diethylethanolamine; the activator is an aqueous solution of piperazine and a homologue thereof.

The activator is preferably an activator having a mass percentage of 0.1-20wt% and a concentration of 0.1-2 mol/L.

The aqueous solution of piperazine and a homologue thereof is preferably an aqueous solution of one or a mixture of two or more of piperazine, N-aminoethylpiperazine, hydroxyethylpiperazine and 1-methylpiperazine.

An antioxidant is preferably added to the decarbonization solution, and an anion exchange resin is preferably used as a scavenging agent for a sulfurized degradation product.

An application of the non-aqueous decarbonization solution, where the non-aqueous decarbonization solution is applied to a carbon dioxide-containing industrial waste gas, such as a flue gas from a power plant, and a tail gas, a water gas, a biogas, a natural gas or a carbonate ore decomposition gas from an oil refinery, a steel plant, a cement plant and a chemical plant, to capture gaseous carbon dioxide generated in the production process, and has a broad application prospect.

The reason that the aqueous solution of piperazine and a homologue thereof is used as an activator mainly lies in that:
(1) the piperazine and its homologue themselves have a certain capacity to absorb carbon dioxide, and can accelerate the absorption of CO₂ by the solution by their own absorption;
(2) the piperazine and its homologue can react with the solute and water in the process of absorbing CO₂, thereby speeding up protonation of the solute; the protonated solute can be combined with HCO³⁻ more quickly in a desorption stage, so that the HCO³⁻ generated by the reaction of water absorbed due to the hygroscopicity of the solution is decomposed, which makes a more complete regeneration process, and reduces the impact of the hygroscopicity;
(3) the piperazine and its homologue can self-regenerate throughout the reaction process, and complete an activation process; and
(4) the piperazine and its homologue have strong heat-resistant degradation ability and corrosion resistance, are stable in nature, and can still be actively stable after repeated cycles of desorption.

The mixed solution of EMEA + DEMEA + PZ aqueous solution is preferably used as an absorbent, and its advantages are as follows:
(1) the absorption capacity of the mixture is increased by 0.027% compared to an EMEA + DEMEA non-aqueous solution;
(2) the regeneration efficiency of the mixture is increased by (5-30)% compared to an aqueous solution to which piperazine is not added; and
(3) the cyclic desorption and absorption capacities of the mixture are higher than those of the EMEA + DEMEA non-aqueous solution.

The effects and benefits of the present invention are as follows: the non-aqueous decarbonization solution of the present invention is capable of capturing 2%-90% by volume of carbon dioxide in the mixed gas, and has a large absorption capacity of (49-51) Nm³ CO₂ per m³ solution per hour, a high desorption capacity of (49-49.5) Nm³ CO₂ per m³ solution, and a desorption rate over 98%, with the desorption starting at 70-90°C and being complete at 45 min; the regeneration efficiency can be increased by (5-30)% compared to an aqueous solution to which piperazine is not added. The desorption rate and desorption capacity of a traditional solution using water alone as solvent are very low; it takes about 90 minutes to completely desorb, and the desorption rate is between 50% and 70%. Therefore, the present invention can effectively reduce the hygroscopicity impact of the solvent, reduce energy consumption, and is suitable for recovering carbon dioxide in varying chemical reaction tail gases, combustion flue gases, ore decomposition gases, natural gases, coal gases and biogases. The most important feature of the present invention is that the addition of the aqueous piperazine solution to a non-aqueous solution attenuates the effect that the regeneration efficiency is reduced due to the hygroscopicity of the non-aqueous solution, accelerates the regeneration rate, and reduces the regeneration energy consumption.

### BRIEF DESCRIPTION OF THE DRAWINGS

FIG. 1 is a graph showing an effect of a desorption rate when water with different mass fractions is added for mixing, where a desorption temperature is 110°C and A desorption time is 45 min.
FIG. 2 is a graph showing an effect of a desorption rate when an aqueous piperazine solution is added with different mass fractions and different molar quantities for mixing, where a desorption temperature is 110°C and a desorption time is 45 min.
FIG. 3 is a graph showing absorption and desorption effects when a mixed solution of ethylethanolamine (EMEA) + N, N-diethylethanolamine (DEMEA) + aqueous piperazine (PZ) solution cyclically absorbs for 5 times. Where: V absorption means CO₂ absorption volume, V desorption means CO₂ desorption volume.
FIG. 4 is a diagram of an absorption and desorption device,
   where: 1. mass flowmeter; 2. buffering bottle; 3. three-necked flask; 4. rotor; 5. oil bath; 6. thermometer; 7. condensation tube; 8. drying bottle; 9. wet flowmeter computer; 10. meteorological chromatogram; and 11. computer.

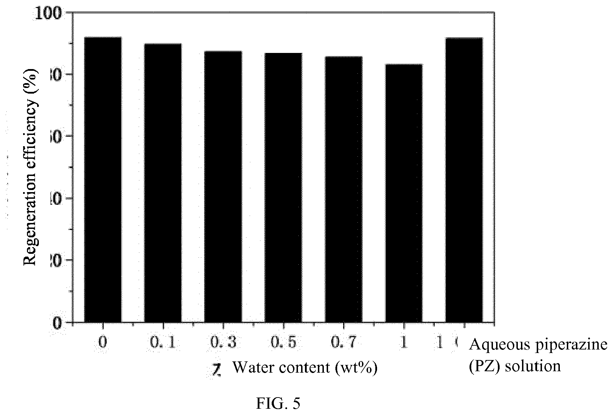

FIG. 5 is a graph showing comparison of regeneration efficiency between an aqueous solution and a solution added with an activator.

### DETAILED DESCRIPTION

The following describes specific implementations of the present invention in more detail with reference to accompanying drawings and technical solutions.

### Embodiment 1

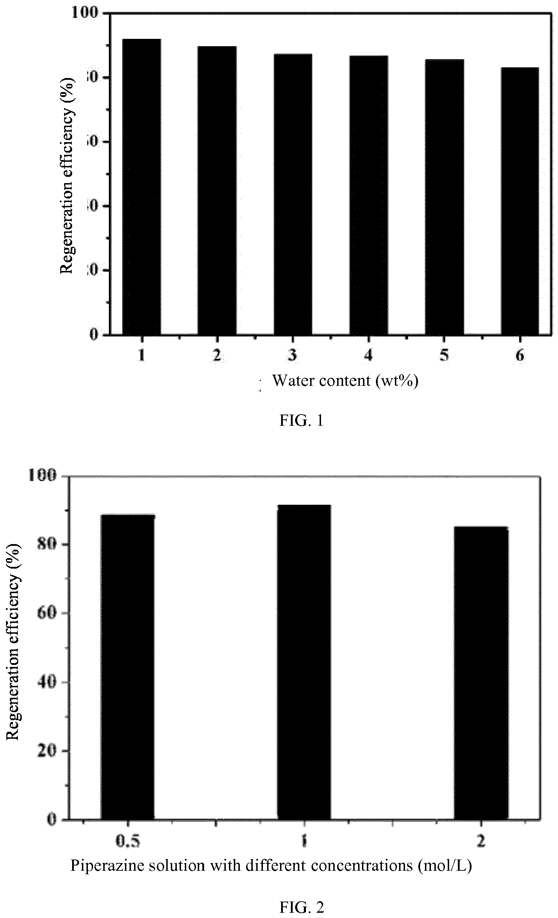

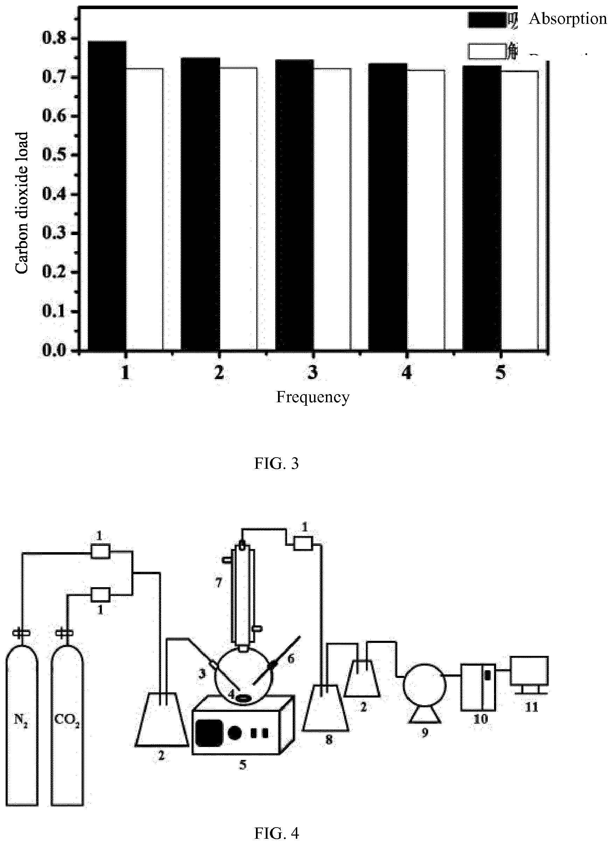

100 g of mixed decarbonization solution is used as an absorption solution, and is fed into a 250 ml reactor equipped with a constant-temperature oil bath stirrer (see FIG. 4 for the experimental apparatus), where ethylethanolamine (EMEA) has a mass fraction of (29.7-30)%, N,N-diethylethanolamine (DEMEA) is used as a solvent and has a mass fraction of (69.3-70)%, and the rest is water. CO₂ having a pressure of 0.2 MPa and a concentration of 99.995% is introduced at a temperature of 40°C and a flow rate of 250 mL/min; continuous measurement is performed with a wet anti-corrosion flowmeter; after the solution is saturated, an oil bath temperature is set to 110°C for desorption, and a desorption capacity at 45 min is measured (see FIG. 1).

### Embodiment 2

100 g of mixed decarbonization solution is used as an absorption solution, and is fed into a 250 ml reactor equipped with a constant-temperature oil bath stirrer (see FIG. 4 for the experimental apparatus), where EMEA has a mass fraction of (29-30)%, DEMEA is used as a solvent and has a mass fraction of (69-70)%, and the rest is an aqueous piperazine solution. CO₂ having a pressure of 0.2 MPa and a concentration of 99.995% is introduced at a temperature of 40°C and a flow rate of 250 mL/min; continuous measurement is performed with a wet anti-corrosion flowmeter; after the solution is saturated, an oil bath temperature is set to 110°C for desorption, and a desorption capacity at 45 min is measured. Five absorption and desorption tests are performed to determine the stability (see FIG. 2 and FIG. 3).

It can be seen from the examples that in the absence of an activator, the absorption capacity of the solution first decreases and then increases, and the regeneration efficiency gradually decreases. After the addition of piperazine as an activator, the absorption and desorption capacities of the solution do not decrease, but increase slightly compared to the original non-aqueous solution. Moreover, after five times of absorption and desorption, the absorption and desorption capacities of the solution are similar and stable, and the solution can be applied for industrialization.

In summary, the non-aqueous decarbonization solution of the present invention has good absorption and desorption effects, and can overcome the effect that the regeneration efficiency is reduced due to the hygroscopicity of the non-aqueous solution. Moreover, since the addition of the activator shortens the regeneration time, regeneration energy consumption is reduced, the amount of cooling water used for removing water vapor contained in a flue gas is also reduced, and an economic benefit can be improved. In addition, after five times of absorption and desorption, the absorbent still has a good absorption effect, so that the present invention has a good industrial application prospect.

## Claims

1. A decarbonization solution for capturing carbon dioxide in a mixed gas and capable of reducing an impact of hygroscopicity, wherein the decarbonization solution for capturing carbon dioxide in a mixed gas and capable of reducing an impact of hygroscopicity comprises a solute, a solvent and an activator; the mass percentage of the solute and the solvent is 80.0-99.9wt% of the decarbonization solution, and the activator accounts for the rest mass percentage; the decarbonization solution is capable of being used under the conditions: 0-1.2 MPa of pressure, and 10-140°C of temperature; the solute is N-ethylethanolamine;
the solvent is N,N-diethylethanolamine; the activator is an aqueous solution of piperazine and a homologue thereof.

2. The decarbonization solution for capturing carbon dioxide in a mixed gas and capable of reducing an impact of hygroscopicity according to claim 1, wherein the activator is an activator having a mass percentage of 0.1-20wt% and a concentration of 0.1-2 mol/L.

3. The decarbonization solution for capturing carbon dioxide in a mixed gas and capable of reducing an impact of hygroscopicity according to claim 1 or 2, wherein the aqueous solution of piperazine and a homologue thereof is an aqueous solution of one or a mixture of two or more of piperazine, N-aminoethylpiperazine, hydroxyethylpiperazine and 1-methylpiperazine.

4. The decarbonization solution for capturing carbon dioxide in a mixed gas and capable of reducing an impact of hygroscopicity according to claim 1 or 2, wherein an antioxidant is added to the decarbonization solution, and an anion exchange resin is used as a scavenging agent for a sulfurized degradation product.

5. The decarbonization solution for capturing carbon dioxide in a mixed gas and capable of reducing an impact of hygroscopicity according to claim 3, wherein an antioxidant is added to the decarbonization solution, and an anion exchange resin is used as a scavenging agent for a sulfurized degradation product.

6. A process for applying the decarbonization solution of any one of claims 1-5 for capturing carbon dioxide in a mixed gas, wherein the decarbonization solution is used under the conditions of 0-1.2 MPa of pressure, and 10-140°C of temperature.
